(19) Europäisches Patentamt
European Patent Office
Office européen des brevets

(11) **EP 4 369 774 A1**

(12) **EUROPEAN PATENT APPLICATION**
published in accordance with Art. 153(4) EPC

(43) Date of publication:
**15.05.2024 Bulletin 2024/20**

(21) Application number: **22848509.0**

(22) Date of filing: **26.07.2022**

(51) International Patent Classification (IPC):
**H04W 24/10** $^{(2009.01)}$

(52) Cooperative Patent Classification (CPC):
**H04W 8/24; H04W 24/10**

(86) International application number:
**PCT/CN2022/107819**

(87) International publication number:
**WO 2023/005904 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2021 CN 202110848557**

(71) Applicant: **Huawei Technologies Co., Ltd.
Longgang
Shenzhen, Guangdong 518129 (CN)**

(72) Inventors:
• **ZHANG, Yongping**
  **Shenzhen, Guangdong 518129 (CN)**
• **LI, Baojin**
  **Shenzhen, Guangdong 518129 (CN)**
• **YU, Zheng**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INFORMATION TRANSMISSION METHOD AND APPARATUS**

(57) This application provides an information transmission method and apparatus. The method includes: A terminal device generates first indication information, where the first indication information includes information about a number of resource pairs and first information. Resource pair information indicates a number of resource pairs supported by the terminal device in one reference signal resource set, and/or a number of resource pairs supported by the terminal device in one frequency unit. The first information includes at least one or more of information about a number of ports, information about a number of resources, or information about a total number of ports. The first information is associated with the resource pair information. The terminal device sends the first indication information. According to the method, the first indication information reported by the terminal device may indicate a capability of the terminal device for processing CSI associated with an NCJT measurement hypothesis, to avoid capability under-reporting when the terminal device reports only a capability of processing CSI associated with a single-TRP measurement hypothesis.

FIG. 3

**Description**

**CROSS-REFERENCE TO RELATED APPLICATIONS**

This application claims priority to Chinese Patent Application No. 202110848557.0, filed with the China National Intellectual Property Administration on July 27, 2021 and entitled "INFORMATION TRANSMISSION METHOD AND APPARATUS", which is incorporated herein by reference in its entirety.

**TECHNICAL FIELD**

This application relates to the field of communication technologies, and in particular, to an information transmission method and apparatus.

**BACKGROUND**

In a 5th generation (5th generation, 5G) wireless communication system such as a new radio (new radio, NR) system, to improve downlink performance, a multi-transmission reception point (transmission reception point, TRP) transmission technology, that is, a non-coherent joint transmission (non-coherent joint transmission, NCJT) technology, is introduced. When the multi-TRP transmission technology is used, a maximum of two TRPs may simultaneously provide data transmission services for a same terminal device.

In a communication process, the TRP needs to first obtain channel state information (channel state information, CSI) of a downlink channel between the TRP and the terminal device. Specifically, the TRP transmits a channel state sounding signal on a preconfigured channel measurement resource (channel measurement resource, CMR), and the terminal device receives the channel state sounding signal on a corresponding CMR, and performs channel estimation based on the channel state sounding signal. In addition, a network device further configures, for the terminal device, a group of interference measurement resources (interference measurement resources, IMRs) corresponding to the CMR. The terminal device receives a signal on the IMR, performs interference measurement, calculates the CSI based on measurement results on the CMR and the IMR, and finally feeds back the CSI to the TRP through an uplink channel. The TRP sends service data to the terminal device on a downlink data channel based on the CSI fed back by the terminal device. In an earlier version of NR, reporting of CSI is associated with a single-TRP measurement hypothesis. To be specific, when the terminal device performs CSI calculation, it is assumed that subsequent data is sent from one TRP. However, after the multi-TRP transmission technology is introduced, the CSI associated with the single-TRP measurement hypothesis cannot well support a measurement requirement of multi-TRP transmission.

A measurement on the CSI associated with the single-TRP measurement hypothesis differs in complexity from a measurement on CSI associated with a multi-TRP measurement hypothesis. Specifically, in the measurement on the CSI associated with the single-TRP measurement hypothesis, the terminal device performs CSI calculation on one measurement resource, to obtain a group of CSI results. However, in the measurement on the CSI associated with the multi-TRP measurement hypothesis, measurement resources used for channel measurement are from two different TRPs. Therefore, signals interfere with each other, and consequently, measurement complexity of the CSI is greatly increased. Therefore, the terminal device needs to notify the network device of a capability of processing CSI measurement and reporting in advance, so that the network device configures or triggers the CSI measurement and reporting based on an actual capability of the terminal device.

However, how the terminal device reports a capability so that the network device accurately can obtain a capability of the terminal device for processing calculation of CSI associated with different measurement hypotheses is an urgent problem to be resolved.

**SUMMARY**

This application provides an information transmission method and apparatus, to enable a network device to obtain, in a multi-TRP transmission scenario, a capability of a terminal device for processing calculation of CSI associated with different measurement hypotheses.

According to a first aspect, this application provides an information transmission method. The method is performed by a terminal device or a module in a terminal device. An example in which the method is performed by the terminal device is used for description herein. The method includes: The terminal device generates first indication information, where the first indication information includes at least one piece of first information and at least one piece of first resource pair information, and one piece of first information is associated with one piece of first resource pair information; or the first indication information includes at least one piece of first information, and one piece of first information is associated with a number of resource pairs. The first resource pair information indicates a number of resource pairs supported by the terminal device in one reference signal resource set, and/or a number of resource pairs supported by the terminal device in one frequency unit. The first information includes at least one or more of information about a number of first ports, information about a number of first resources, or information about a total number of first ports. The terminal device sends the first indication information.

According to the method, the first indication information reported by the terminal device may indicate the number of resource pairs supported by the terminal device, to indicate a capability of the terminal device for processing CSI associated with an NCJT measurement hypothesis, to avoid capability under-reporting when the terminal device reports only a capability of processing CSI associated with a single-TRP measurement hypothesis.

In a possible implementation, the frequency unit is one or more carriers, the frequency unit is one or more bands, the frequency unit is one or more band combinations, or the frequency unit is one or more bandwidth parts.

In a possible implementation, the information about the number of first ports indicates a maximum number of transmit ports in one resource, and/or a maximum number of transmit ports in one resource within a resource pair.

In this embodiment of this application, the maximum number of transmit ports supported in the one resource determines maximum complexity of any CSI measurement. The terminal device reports the maximum number of transmit ports supported in the one resource, so that complexity corresponding to any CSI measurement configured by a network device does not exceed a hardware capability of the terminal device. In addition, the first port information indicates the maximum number of transmit ports supported in the one resource within the one resource pair, so that the network device can obtain maximum measurement complexity that is of CSI associated with the NCJT measurement hypothesis and that can be supported by the terminal device.

In a possible implementation, the information about the number of first resources indicates a number of reference signal resources that can be supported by the terminal device in one frequency unit.

In a possible implementation, the information about the total number of first ports indicates a total number of ports supported by the terminal device in one frequency unit, and/or a total number of ports in a resource pair that are supported by the terminal device in one frequency unit.

In this embodiment of this application, the total number of ports supported in the one frequency unit determines maximum complexity that is of all CSI measurements and that can be supported by the terminal device. The terminal device reports the total number of ports supported in the one frequency unit, so that complexity corresponding to all CSI measurements that are simultaneously configured by the network device does not exceed the hardware capability of the terminal device. In addition, the terminal device indicates, by reporting the total number of ports in the resource pair that are supported in the one frequency unit, support of total measurement complexity of CSI associated with all NCJT measurement hypotheses.

In a possible implementation, the first indication information includes capability information per band per band combination; or the first indication information includes capability information per band and per band combination.

In a possible implementation, the method further includes: The terminal device sends second indication information, where the second indication information includes at least one of at least one piece of second information and at least one piece of third information.

The second information indicates a channel state information CSI measurement and a codebook combination that are supported by the terminal device in a same time unit, where the CSI measurement includes at least a joint CSI measurement on a resource pair, and the codebook combination includes one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection.

The third information includes at least one piece of fourth information and at least one piece of second resource pair information, and one piece of fourth information is associated with one piece of second resource pair information; or the third information includes at least one piece of fourth information, and one piece of fourth information is associated with a number of resource pairs; and the fourth information includes at least one or more of information about a number of second ports, information about a number of second resources, and information about a total number of second ports.

Parameters included in the third information are capability parameters of the CSI measurement and the codebook combination that are supported by the terminal device and indicated by the second information.

The information about the number of first resource pairs and the first information that are included in the first indication information are used to determine, in a case of the CSI measurement and the codebook combination that are supported by the terminal device and indicated by the second information, the capability parameter of the CSI measurement supported by the terminal device.

The second indication information may indicate a corresponding capability of the terminal device for processing CSI when the terminal device performs hybrid scheduling in a case of the NCJT measurement hypothesis and different codebook combinations. This may avoid capability under-reporting when the terminal device separately reports only the capability of processing the CSI associated with the single-TRP measurement hypothesis and the capability of processing the CSI associated with the NCJT measurement hypothesis.

In a possible implementation, the information about the number of second ports indicates a maximum number of transmit ports in one resource, and/or a maximum number of transmit ports in one resource within a resource pair.

The information about the number of second resources indicates a number of reference signal resources that can be supported by the terminal device in one frequency unit.

The information about the total number of second ports indicates a total number of ports supported by the terminal device in one frequency unit, and/or a total number of ports in a resource pair that are supported by the terminal device in one frequency unit.

In a possible implementation, the second indication information includes capability information per band per band combination.

Alternatively, the second indication information includes capability information per band and per band combination.

According to a second aspect, this application provides an information transmission method. The method is performed by a network device or a module in a network device. An example in which the method is performed by the network device is used for description herein. The method includes: The network device receives first indication information from a terminal device, where the first indication information includes at least one piece of first information and at least one piece of first resource pair information, and one piece of first information is associated with one piece of first resource pair information; or the first indication information includes at least one piece of first information, and one piece of first information is associated with a number of resource pairs. The first resource pair information indicates a number of resource pairs supported by the terminal device in one reference signal resource set, and/or a number of resource pairs supported by the terminal device in one frequency unit. The first information includes at least one or more of information about a number of first ports, information about a number of first resources, or information about a total number of first ports. The network device configures a channel measurement resource for the terminal device based on the first indication information.

In a possible implementation, the frequency unit is one or more carriers, the frequency unit is one or more bands, the frequency unit is one or more band combinations, or the frequency unit is one or more bandwidth parts.

In a possible implementation, the information about the number of first ports indicates a maximum number of transmit ports in one resource, and/or a maximum number of transmit ports in one resource within a resource pair.

In a possible implementation, the information about the number of first resources indicates a number of reference signal resources that can be supported by the terminal device in one frequency unit.

In a possible implementation, the information about the total number of first ports indicates a total number of ports supported by the terminal device in one frequency unit, and/or a total number of ports in a resource pair that are supported by the terminal device in one frequency unit.

In a possible implementation, the first indication information includes capability information per band per band combination; or the first indication information includes capability information per band and per band combination.

In a possible implementation, the network device receives second indication information from the terminal device, where the second indication information includes at least one piece of second information and at least one piece of third information. The second information indicates a channel state information CSI measurement and a codebook combination that are supported by the terminal device in a same time unit, where the CSI measurement includes at least a joint CSI measurement on a resource pair, and the codebook combination includes one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection. The third information includes at least one piece of fourth information and at least one piece of second resource pair information, and one piece of fourth information is associated with one piece of second resource pair information; or the third information includes at least one piece of fourth information, and one piece of fourth information is associated with a number of resource pairs; and the fourth information includes at least one or more of information about a number of second ports, information about a number of second resources, and information about a total number of second ports.

Parameters included in the third information are capability parameters of the CSI measurement and the codebook combination that are supported by the terminal device and indicated by the second information. The information about the number of first resource pairs and the first information that are included in the first indication information are used to determine, in a case of the CSI measurement and the codebook combination that are supported by the terminal device and indicated by the second information, the capability parameter of the CSI measurement supported by the terminal device.

In a possible implementation, the information about the number of second ports indicates a maximum number of transmit ports in one resource, and/or a maximum number of transmit ports in one resource within a resource pair. The information about the number of second resources indicates a number of reference signal resources that can be supported by the terminal device in one frequency unit. The information about the total number of second ports indicates a total number of ports supported by the terminal device in one frequency unit, and/or a total number of ports in a resource pair that are supported by the terminal device in one frequency unit.

In a possible implementation, the second indication information includes capability information per band per band combination; or the second indication information includes capability information per band and per band combination.

According to a third aspect, this application further provides a communication apparatus. The communication apparatus has a function of implementing any method provided in the first aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a network device.

In a possible implementation, the communication apparatus includes corresponding functional modules, configured to implement the steps in the foregoing method. A function may be implemented by hardware, or may be implemented by hardware executing corresponding software. The hardware or software includes one or more modules corresponding to the foregoing function.

In a possible implementation, a structure of the communication apparatus includes a processing unit and a communication unit. These units may perform corresponding functions in the foregoing method examples. For details, refer to the descriptions in the method according to the first aspect. Details are not described herein again.

According to a fourth aspect, this application further provides a communication apparatus. The communication apparatus has a function of implementing any method provided in the second aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding functional modules, configured to implement the steps in the foregoing method. A function may be implemented by hardware, or may be implemented by hardware executing corresponding software. The hardware or software includes one or more modules corresponding to the foregoing function.

In a possible implementation, a structure of the communication apparatus includes a processing unit and a communication unit. These units may perform corresponding functions in the foregoing method examples. For details, refer to the descriptions in the method according to the second aspect. Details are not described herein again.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to execute a computer program or instructions, to implement the method according to any one of the first aspect or the possible implementations of the first aspect.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to execute a computer program or instructions, to implement the method according to any one of the second aspect or the possible implementations of the second aspect.

According to a seventh aspect, a communication apparatus is provided, including a processor and a memory, where the memory stores a computer program or instructions. The processor is configured to execute the computer program or the instructions stored in the memory, to implement the method according to any one of the first aspect or the possible implementations of the first aspect.

According to an eighth aspect, a communication apparatus is provided, including a processor memory, where the memory stores a computer program or instructions. The processor is configured to execute the computer program or the instructions stored in the memory, to implement the method according to any one of the second aspect or the possible implementations of the second aspect.

According to a ninth aspect, a communication apparatus is provided, including a processor and an interface circuit. Optionally, the communication apparatus further includes a memory, and the memory stores a computer program or instructions. The interface circuit is configured to: receive a signal from a communication apparatus other than the communication apparatus and transmit the signal to the processor, or send a signal from the processor to a communication apparatus other than the communication apparatus. The processor is configured to execute the computer program or the instructions stored in the memory, to implement the method according to any one of the first aspect or the possible implementations of the first aspect.

According to a tenth aspect, a communication apparatus is provided, including a processor and an interface circuit. Optionally, the communication apparatus further includes a memory, and the memory stores a computer program or instructions. The interface circuit is configured to: receive a signal from a communication apparatus other than the communication apparatus and transmit the signal to the processor, or send a signal from the processor to a communication apparatus other than the communication apparatus. The processor is configured to execute the computer program or the instructions stored in the memory, to implement the method according to any one of the second aspect or the possible implementations of the second aspect.

According to an eleventh aspect, a computer-readable storage medium is provided, where the computer-readable storage medium stores a computer program or instructions. When the computer program or the instructions is or are run on a computer, the computer is enabled to implement the method according to any one of the first aspect and the second aspect or the possible implementations of the first aspect and the second aspect.

According to a twelfth aspect, a computer program product storing computer-readable instructions is provided. When the computer-readable instructions are run on a computer, the computer is enabled to implement the method according to any one of the first aspect and the second aspect or the possible implementations of the first aspect and the second aspect.

According to a thirteenth aspect, a chip is provided. The chip includes a processor, and may further include a memory, configured to execute a computer program or instructions stored in the memory, so that a chip system implements the method any one of the first aspect and the second aspect or the possible implementations of the first aspect and the second aspect.

According to a fourteenth aspect, a communication apparatus is provided, including modules configured to implement the method in any one of the first aspect and the possible implementations of the first aspect.

According to a fifteenth aspect, a communication apparatus is provided, including modules configured to implement the method in any one of the second aspect and the possible implementations of the second aspect.

According to a sixteenth aspect, a communication system is provided. The system includes the apparatus (for example, the terminal device) according to the third aspect and the apparatus (for example, the network device) according to the fourth aspect.

## BRIEF DESCRIPTION OF DRAWINGS

FIG. 1 is a schematic diagram of a network architecture of a multi-DCI based NCJT technology to which an embodiment of this application is applicable;

FIG. 2 is a schematic diagram of a network architecture of a single-DCI based NCJT technology to which an embodiment of this application is applicable;

FIG. 3 is a schematic flowchart of an information transmission method according to an embodiment of this application;

FIG. 4 is a schematic diagram of terminal capability reporting according to an embodiment of this application;

FIG. 5 is a schematic diagram of a structure of a communication apparatus according to an embodiment of this application; and

FIG. 6 is a schematic diagram of a structure of a communication apparatus according to an embodiment of this application.

## DESCRIPTION OF EMBODIMENTS

The following describes embodiments of this application in detail with reference to the accompanying drawings of this specification.

Technical solutions of embodiments of this application may be applied to various mobile communication systems, such as a new radio (new radio, NR) system, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a future communication system, or another communication system. This is not specifically limited herein.

In embodiments of this application, a terminal device is a device having a wireless transceiver function, or a chip that can be disposed in the device. The device having the wireless transceiver function may also be referred to as user equipment (user equipment, UE), an access terminal, a user unit, a user station, a mobile station, a remote station, a remote terminal, a mobile device, a user terminal, a user agent, or a user apparatus. During actual application, the terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing device having the wireless transceiver function and the chip that can be disposed in the device are collectively referred to as the terminal device.

In embodiments of this application, the network device may be a wireless access device in various standards, for example, may be a next generation base station (next generation NodeB, gNB) in an NR system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a Home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP or transmission point, TP), or the like. The network device may alternatively be a network node that constitutes a gNB or a transmission point, for example, a baseband unit (baseband unit, BBU) or a DU in a central unit-distributed unit (central unit-distributed unit, CU-DU) architecture.

Embodiments of this application are applicable to scenarios in which one or more sending and receiving apparatuses provide data transmission services for a same terminal device, and a scenario derived from any one of the scenarios. The sending and receiving apparatus may be a TRP, or may be a remote radio unit (remote radio unit, RRU). In a scenario of a plurality of TRPs, the plurality of TRPs may be connected to a same baseband unit (baseband unit, BBU), or may be connected to different BBUs. The plurality of TRPs herein may belong to a same cell, or may belong to different cells.

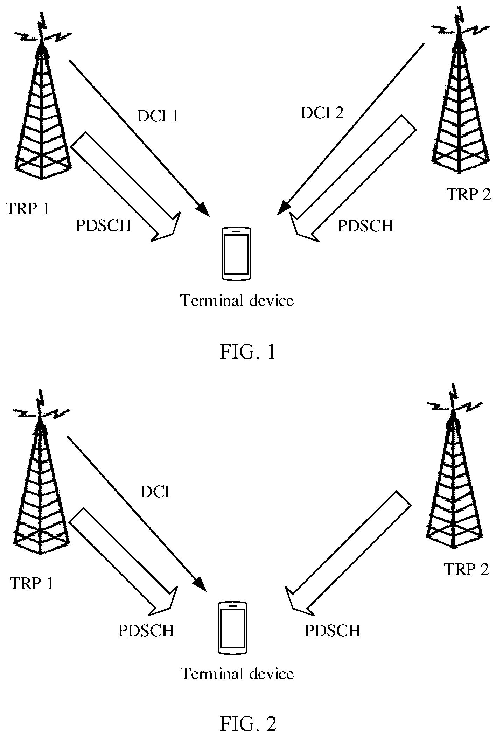

In a multi-TRP transmission technology, that is, in an NCJT technology, a maximum of two TRPs may simultaneously provide data transmission services for a same terminal device. In terms of implementation, currently, there are two manners: a multi-downlink control information (downlink control information, DCI) based NCJT technology shown in FIG. 1, and a single-DCI based NCJT technology shown in FIG. 2.

In the multi-DCI based NCJT technology, the two TRPs each send one piece of DCI, and send the DCI to a same terminal device by scheduling two physical downlink shared channels (physical downlink share channels, PDSCHs), where one PDSCH is scheduled for one piece of DCI. In the single-DCI based NCJT technology, only one TRP in the two TRPs sends one piece of DCI by scheduling one PDSCH. Partial streams/layers (corresponding to partial demodulation reference signal (demodulation reference signal, DMRS) ports) in the PDSCH are transmitted by one TRP, and another partial streams/layers (corresponding to partial DMRS ports) are transmitted by the other TRP.

Before providing the data transmission service for the terminal device, the TRP needs to obtain CSI of a downlink channel between the TRP and the terminal device in advance. In an earlier version of NR, CSI reporting is performed based on a single-TRP measurement hypothesis. To be specific, when the terminal device performs CSI calculation, it is assumed that subsequent data is sent from one TRP. After a multi-TRP transmission technology is introduced, CSI associated with the single-TRP measurement hypothesis cannot meet a channel model, and cannot well support a measurement requirement of multi-TRP transmission. Therefore, in embodiments of this application, CSI associated with a multi-TRP measurement hypothesis or an NCJT measurement hypothesis may be introduced.

For ease of understanding, in embodiments of this application, the CSI associated with the single-TRP measurement hypothesis and the CSI associated with the multi-TRP or NCJT measurement hypothesis are defined as follows.

The CSI associated with the single-TRP measurement hypothesis is a CSI parameter other than channel state information reference signal resource indicator (CSI-RS resource indicator, CRI) information in the CSI, for example, rank indicator (rank indicator, RI) information, precoding matrix indicator (precoding matrix indicator, PMI) information, channel quality indicator (channel quality indicator, CQI) information, and layer indicator (layer indicator, LI) information. The foregoing information may be obtained through measurement performed by the terminal device on a CMR corresponding to the CRI and an IMR corresponding to the CMR.

The CSI associated with the NCJT measurement hypothesis is a CSI parameter other than channel state information reference signal resource indicator information in the CSI, for example, rank indicator information, precoding matrix indicator information, channel quality indicator information, and layer indicator information. The foregoing information is obtained through measurement performed by the terminal device on two CMRs included in a CMR pair corresponding to the CRI and an IMR corresponding to the CMR pair.

When reporting of the CSI associated with the NCJT measurement hypothesis is introduced, the network device may still configure, for the terminal device, Ks non-zero power channel state information reference signal (non-zero power channel state information reference signal, NZP CSI-RS) resources used for channel measurement to form an NZP CSI-RS resource set. CSI reporting associated with the NZP CSI-RS resource set may include M single-TRP measurement hypotheses and N NCJT measurement hypotheses.

For example, the network device may configure or indicate M (M≤Ks) NZP CSI-RS resources in the Ks NZP CSI-RS resources, that is, configure or indicate M CMRs and IMRs associated with the M CMRs. The terminal device performs, based on the single-TRP measurement hypothesis, CSI calculation on the M CMRs and the IMRs associated with the M CMRs. In this case, the NZP CSI-RS resource set includes the M single-TRP measurement hypotheses.

The network device may further configure or indicate N (N≥1) CMR pairs (channel measurement resource pairs, channel measurement resource pairs) in the Ks NZP CSI-RS resources, where each CMR pair includes two NZP CSI-RS resources, and each NZP CSI-RS resource is associated with a different TRP. In other words, from the perspective of configuration, two NZP CSI-RS resources corresponding to a same CMR pair are associated with two different pieces of transmission configuration indicator state (transmission configuration indicator state, TCI state) information. The TCI state information includes quasi-co-location (quasi co-location, QCL) information of the NZP CSI-RS resource. The terminal device may receive a reference signal on a corresponding NZP CSI-RS resource based on the QCL information included in the TCI state information. The terminal device may perform, based on the NCJT measurement hypothesis, CSI calculation on the two NZP CSI-RS resources included in each CMR pair. Therefore, when N CMR pairs are configured, it means that there are N NCJT measurement hypotheses.

Alternatively, CSI reporting associated with the NZP CSI-RS resource set may include Ks single-TRP measurement hypotheses. In this case, the network device may configure an interference measurement resource set associated with the NZP CSI-RS resource set, and the terminal device performs CSI calculation on Ks NZP CSI-RS resources and associated IMRs based on the single-TRP measurement hypotheses.

The following describes a relationship between a CSI report and a codebook type. Currently, the NR system supports CSI reporting of six different PMI codebook types. The six PMI codebook types include: a type I single-panel codebook, a type I multi-panel codebook, a type II codebook, a type II port selection codebook, an enhanced type II codebook, and an enhanced type II port selection codebook.

Each CSI report corresponds to one codebook type, and is indicated by the network device to the terminal device. Because a hardware computing capability of the terminal device is fixed, processing capabilities of CSI calculation also vary with different codebook types. To enable a configuration of the network device to match a processing capability of the terminal device, for each codebook type and a plurality of hybrid codebook types supported by the terminal device (that is, a computing capability of the terminal device for simultaneously processing CSI reports based on a plurality of different codebook types), the terminal device may enable, by using a group of triplet parameters, the network device to obtain a CSI measurement and reporting capability. The triplet parameters may be represented as {P, S, T}. The triplet parameters include: a maximum number of transmit ports in one resource (maxNumberTxPortsPerResource), represented by P; a maximum number of resources (maxNumberResourcePerBand), represented by S; and a total number of transmit ports (totalNumberTxPortsPerBand), represented by T. It should be understood that a sequence of the triplet is not limited herein, and a real reporting manner of the triplet may also include direct reporting, reporting in an index form, or another manner. Alternatively, the terminal device may enable the network device to obtain the CSI measurement and reporting capability in another manner.

For example, the terminal device reports three triplet capability parameters: {8, 8, 64}, {16, 4, 64}, and {32, 2, 64}. The following configurations meet a reporting capability of the terminal device:

Six 8-port NZP CSI-RS resources: In the foregoing configuration, the maximum number of transmit ports of one resource is 8, the number of resources is 6, and the total number of transmit ports is 48. This does not exceed the capability parameter {8, 8, 64}.

Two 8-port NZP CSI-RS resources and two 16-port NZP CSI-RS resources: In the foregoing configuration, the maximum number of transmit ports of one resource is 16, the number of resources is 4, and the total number of transmit ports is 48. This does not exceed the capability parameter {16, 4, 64}.

However, the following configurations may exceed the reporting capability of the terminal device:

Ten 8-port NZP CSI-RS resources: In the foregoing configuration, the maximum number of transmit ports of one resource is 8, the number of resources is 10, and the total number of transmit ports is 80. The number of resources and the total number of transmit ports exceed any one of the capability parameters {8, 8, 64}, {16, 4, 64}, and {32, 2, 64} reported by the terminal device.

Two 8-port NZP CSI-RS resources and one 32-port NZP CSI-RS resource: In the foregoing configuration, the maximum number of transmit ports of one resource is 32, the number of resources is 3, and the total number of transmit ports is 48. The maximum number of ports exceeds the capability parameter {8, 8, 64} or {16, 4, 64} reported by the terminal device, and the number of resources exceeds the capability parameter {32, 2, 64} reported by the terminal device.

CSI measurement and reporting are very complex for the terminal device. Therefore, the terminal device needs to notify the network device of a capability of processing CSI measurement and reporting in advance, so that the network device configures or triggers the CSI measurement and reporting based on an actual capability of the terminal device. However, currently, during capability reporting, the terminal device considers only calculation of CSI associated with the single-TRP measurement hypothesis, but does not consider calculation of CSI associated with the NCJT measurement hypothesis.

A measurement on the CSI associated with the single-TRP measurement hypothesis is different from a measurement on CSI associated with the multi-TRP measurement hypothesis in complexity. Specifically, in the calculation of the CSI associated with the single-TRP measurement hypothesis, the terminal device performs CSI calculation on one measurement resource, to obtain a group of CSI results. During CSI calculation in an NCJT measurement mode, the terminal device may perform CSI calculation on two measurement resources, to obtain a group of CSI results. However, signals from the two TRPs interfere with each other, and a channel measurement result that is of the terminal device and that is on a measurement resource corresponding to TRP 1 is interfered with by a signal transmitted by TRP 2. Similarly, a channel measurement result that is of the terminal device and that is on a measurement resource corresponding to TRP 2 is also interfered with by a signal transmitted by TRP 1. To obtain better performance, the terminal device needs to perform joint CSI calculation on the two measurement resources. However, during CSI calculation in a single-TRP measurement mode, the terminal device only needs to perform independent CSI calculation on each measurement resource, and complexity is greatly reduced. In other words, calculation complexity required for performing joint CSI calculation on the two measurement resources based on the NCJT measurement hypothesis is far higher than total calculation complexity required for performing independent CSI calculation on the two measurement resources based on the single-TRP measurement hypothesis.

The measurement resources herein are an NZP CSI-RS resource used for channel measurement and a resource that is used for interference measurement and that is associated with the NZP CSI-RS resource, where the resource used for interference measurement is a CSI-IM resource, or the resource used for interference measurement is a CSI-IM resource and an NZP CSI-RS resource. During measurement, the NZP CSI-RS resources used for channel measurement are from two different TRPs, to simulate NCJT transmission. In other words, calculation complexity required for performing joint CSI calculation on the two measurement resources based on the NCJT measurement hypothesis is far higher than total calculation complexity required for performing independent CSI calculation on the two measurement resources based on the single-TRP measurement hypothesis.

For example, a channel parameter between TRP 1 and the terminal device is H1, and H1 is an $M \times N_1$ matrix, where M is a number of receive antennas configured by the terminal device, and $N_1$ is a number of transmit antennas configured by TRP 1. A channel parameter between TRP 2 and the terminal device is H2, and H2 is an $M \times N_2$ matrix, where $N_2$ is a number of transmit antennas configured by TRP 2. The terminal device estimates the channel parameter H1 based on a reference signal sent by TRP 1. Similarly, the terminal device may further obtain the channel parameter H2 through estimation based on an NZP CSI-RS sent by TRP 2.

A method for implementing reporting of CSI associated with a multi-TRP measurement hypothesis is implemented through two times of reporting of CSI associated with the single-TRP measurement hypothesis. Specifically, a base station separately configures the terminal device to estimate CSI for the TRP 1 based on H1, and the terminal device estimates an optimal precoding matrix $P_1$ during transmission, where $P_1$ is an $N_1 \times r_1$ matrix, $r_1$ represents a number of streams/layers of data, and $P_1$ is an optimal codeword determined in a preset codebook (including several codewords). Index information corresponding to the codeword is referred to as a precoding matrix index (precoding matrix index, PMI), and $r_1$ corresponds to a rank indicator (rank indicator, RI) fed back by the terminal device.

$$\{P_1, r_1\} = \arg\max \log_2\left(1 + \frac{\|H_1 P_1\|^2}{I_0 + N_0}\right) \tag{1}$$

In other words, all possible codewords are traversed in the preset codebook (where a number of columns of a specific codeword corresponds to a rank of the precoding matrix), so that a maximum Shannon capacity is obtained based on a signal to interference plus noise ratio (signal to interference plus noise ratio, SINR). In an actual implementation process, another target function may also be used, for example, some variant functions similar to Shannon capacity. A specific target function to be used is not limited in embodiments of this application. Similarly, the base station configures the terminal device to estimate CSI for TRP 2 based on H2.

$$\{P_2, r_2\} = \arg\max \log_2\left(1 + \frac{\|H_2 P_2\|^2}{I_0 + N_0}\right) \tag{2}$$

However, actually, in a multi-TRP transmission process, SINR 1 of the signal received by the terminal device from TRP 1 and SINR 2 of the signal received by the terminal device from TRP 2 should be respectively represented as:

$$SINR_1 = \frac{\|H_1 P_1\|^2}{\|H_2 P_2\|^2 + I_0 + N_0} \tag{3}$$

$$SINR_2 = \frac{\|H_2 P_2\|^2}{\|H_1 P_1\|^2 + I_0 + N_0} \tag{4}$$

An estimation result of $\{P_1, r_1\}$ affects an estimation result of $\{P_2, r_2\}$, and vice versa. Therefore, the terminal device needs to perform joint estimation to obtain optimal performance, that is, needs to meet the following formula:

$$\{P_1, r_1, P_2, r_2\} = \arg\max\left(\log_2\left(1 + \frac{\|H_1 P_1\|^2}{\|H_2 P_2\|^2 + I_0 + N_0}\right) + \log_2\left(1 + \frac{\|H_2 P_2\|^2}{\|H_1 P_1\|^2 + I_0 + N_0}\right)\right)$$

$$(5)$$

It can be learned from formula (5) that, because four optimal vectors need to be jointly estimated, complexity of the joint estimation is far higher than complexity of estimating two optimal vectors in two groups based on formula (1) and formula (2).

With reference to the foregoing descriptions, because measurement complexity of the CSI associated with the single-TRP measurement hypothesis is different from that of the CSI associated with the NCJT measurement hypothesis, in an aspect, when both the measurement on the CSI associated with the single-TRP measurement hypothesis and the measurement on the CSI associated with the NCJT measurement hypothesis exist, if the terminal device reports a group of pieces of capability information of the terminal device for the CSI measurement based on a conventional technology, the following two problems may occur: capability under-reporting (under-reporting) and over-capability configuration.

For example, it is assumed that an actual capability of the terminal device for processing CSI is as follows.

A capability of processing CSI associated with the NCJT measurement hypothesis is as follows: The terminal device can simultaneously process two channel measurement resource pairs (channel measurement resource pairs, CMR pairs), where the channel measurement resource pairs are associated with two NZP CSI-RS resources, and a maximum number of ports in one NZP CSI-RS resource within a resource pair does not exceed 8; or simultaneously process one channel measurement resource pair, where a maximum number of ports in each NZP CSI-RS resource within one NZP CSI-RS resource pair does not exceed 16.

A capability of processing CSI associated with the single-TRP measurement hypothesis is as follows: The terminal device can simultaneously process four NZP CSI-RS resources, where a maximum number of ports in each NZP CSI-RS resource does not exceed 16; or simultaneously process eight NZP CSI-RS resources, where a maximum number of ports in each NZP CSI-RS resource does not exceed 8.

If the terminal device reports the capability information of the terminal device based on the capability of processing the CSI associated with the NCJT measurement hypothesis, the reported capability information of the terminal device is {8, 4, 32} and {16, 2, 32}. In this case, even if the network device schedules or triggers the terminal device to perform reporting of the CSI associated with the single-TRP measurement hypothesis, the CSI measurement and reporting can be performed on the CSI report only based on the following CSI-RS resource configurations: two 16-port NZP CSI-RS resources or four 8-port NZP CSI-RS resources.

However, the actual capability of the terminal device for processing the CSI is far higher than the foregoing configurations. Therefore, a hardware capability of the terminal device cannot be fully utilized, resulting in capability under-reporting.

If the terminal device reports the capability information of the terminal device based on the capability of processing the CSI associated with the single-TRP measurement hypothesis, the reported capability information of the terminal device is {8, 8, 64} and {16, 4, 64}. In this case, the network device may configure or trigger the terminal device to perform measurement and reporting on CSI associated with the NCJT measurement hypothesis based on the following channel measurement resource configuration: four channel measurement resource pairs, where each resource pair includes two 8-port NZP CSI-RS resources; or two channel measurement resource pairs, where each resource pair includes two 16-port NZP CSI-RS resources. The channel measurement resource configurations exceed the actual capability of the terminal device for processing the CSI associated with the NCJT measurement hypothesis. As a result, over-capability configuration is caused, and the terminal device cannot work normally.

In conclusion, how the terminal device reports the CSI processing capability to avoid severe capability under-reporting or over-capability configuration is an urgent problem to be resolved. Therefore, an embodiment of this application provides a method to resolve the foregoing problems. The following describes the method in detail.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems. In embodiments of this application, a case in which e is less than f may alternatively be a case in which e is less than or equal to f, a case in which e is greater than f may alternatively be a case in which e is greater than or equal to f, and vice versa, where e and f respectively represent two parameters that are compared with each other. For ease of description, in embodiments of this application, one of the cases is used for description, and does not represent any limitation thereto.

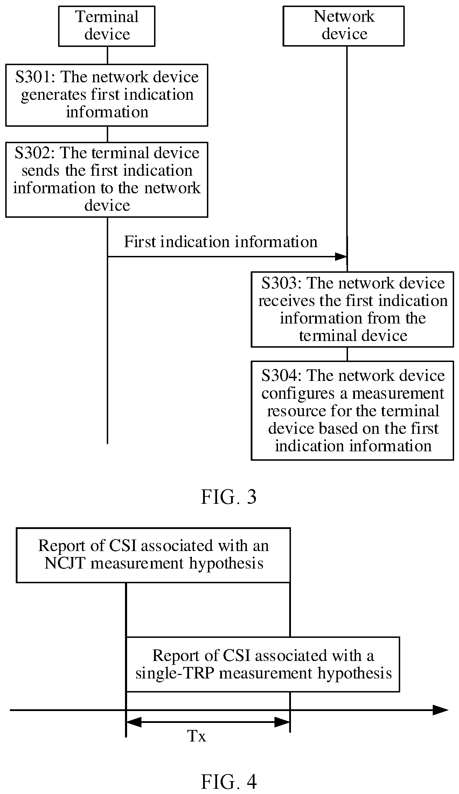

FIG. 3 is a schematic flowchart of an information transmission method according to an embodiment of this application. The method includes the following steps.

S301: A terminal device generates first indication information.

S302: The terminal device sends the first indication information to a network device.

S303: The network device receives the first indication information from the terminal device.

In this embodiment of this application, the first indication information may indicate a capability of the terminal device for processing CSI associated with an NCJT measurement hypothesis.

Specifically, in this embodiment of this application, the first indication information includes at least one piece of first information and at least one piece of first resource pair information, and one piece of first information is associated with one piece of first resource pair information; or the first indication information includes at least one piece of first information, and one piece of first information is associated with a number of resource pairs.

The first resource pair information indicates at least one of the following: a number of resource pairs supported by the terminal device in one reference signal resource set, and a number of resource pairs supported by the terminal device in one frequency unit. In an embodiment, the frequency unit is one or more carriers, the frequency unit is one or more bands (bands), the frequency unit is one or more band combinations (band combinations, BCs), or the frequency unit is one or more bandwidth parts (bandwidth parts, BWPs).

In this embodiment of this application, one resource pair includes two channel measurement resources (channel measurement resources, CMRs). The channel measurement resource is a resource used for sending a reference signal, and may also be referred to as a reference signal resource. The reference signal may include but is not limited to an NZP CSI-RS and the like. For ease of description, the channel measurement resource may be referred to as a resource for short in the following description.

In a possible implementation, the first information may include one or more of the following information: information about a number of first ports, information about a number of first resources, or information about a total number of first ports.

The information about the number of first ports indicates a maximum number of transmit ports supported by the terminal device in one resource. The maximum number of transmit ports supported in the one resource is associated with maximum complexity of any CSI measurement. The terminal device reports the maximum number of transmit ports supported in the one resource, so that complexity corresponding to any CSI measurement configured by the network device does not exceed a hardware capability of the terminal device.

Alternatively, the information about the number of first ports indicates a maximum number of transmit ports supported by the terminal device in one resource within a resource pair. Because measurement complexity of the CSI associated with the NCJT measurement hypothesis may be far higher than measurement complexity of CSI associated with a single-TRP measurement hypothesis, it is very important to indicate the measurement complexity of the CSI associated with the NCJT measurement hypothesis. Therefore, the first port information indicates the maximum number of transmit ports supported in the one resource within the one resource pair, so that the network device can obtain maximum measurement complexity that is of the CSI associated with the NCJT measurement hypothesis and that can be supported by the terminal device.

Alternatively, the information about the number of first ports indicates a maximum number of transmit ports supported in one resource, and a maximum number of transmit ports supported by the terminal device in one resource within a resource pair. Because measurement complexity of the CSI associated with the NCJT measurement hypothesis is far different from measurement complexity of CSI associated with a single-TRP measurement hypothesis, the terminal device may indicate, by reporting the maximum number of transmit ports supported in the one resource, support of measurement complexity of the CSI associated with the single-TRP measurement hypothesis, and indicate, by reporting the maximum number of transmit ports supported in the one resource within the one resource pair, support of measurement complexity of the CSI associated with the NCJT measurement hypothesis, to more accurately indicate a hardware capability of the terminal device.

The information about the number of first resources indicates a number of reference signal resources that can be supported by the terminal device in one frequency unit.

The information about the total number of first ports indicates a total number of ports supported by the terminal device in one frequency unit. The total number of ports supported in the one frequency unit is associated with maximum complexity that is of all CSI measurements and that can be supported by the terminal device. The terminal device reports the total number of ports supported in the one frequency unit, so that complexity corresponding to all CSI measurements that are simultaneously configured by the network device does not exceed a hardware capability of the terminal device.

Alternatively, the information about the total number of first ports indicates a total number of ports in a resource pair that are supported by the terminal device in one frequency unit. For example, a number of resource pairs supported by the terminal device in one frequency unit is 2, and the terminal device may indicate, based on the information about the total number of first ports, that a total number of ports supported in the two resource pairs is 32.

Because measurement complexity of the CSI associated with the NCJT measurement hypothesis is far higher than measurement complexity of CSI associated with a single-TRP measurement hypothesis, it is very important to indicate total measurement complexity of the CSI associated with the NCJT measurement hypothesis. The terminal device may indicate, by reporting the total number of ports in the resource pair that are supported in the one frequency unit, support of total measurement complexity of CSI associated with all NCJT measurement hypotheses.

Alternatively, the information about the total number of first ports indicates a total number of ports supported by the terminal device in one frequency unit, and a total number of ports in a resource pair that are supported by the terminal device in one frequency unit. For example, a number of resource pairs supported by the terminal device in one frequency unit is 2, and a number of reference signal resources supported in the frequency unit is 8. The terminal device may indicate, based on the information about the total number of first ports, that a total number of ports supported in the two resource pairs is 32, and indicate that a total number of ports supported in eight reference signal resource pairs is 64.

Because measurement complexity of the CSI associated with the NCJT measurement hypothesis is far different from measurement complexity of CSI associated with a single-TRP measurement hypothesis, the terminal device may indicate, by reporting the total number of ports supported in the one frequency unit, support of complexity of all CSI measurements including the measurement on the CSI associated with the single-TRP measurement hypothesis, and/or the measurement on the CSI associated with the NCJT measurement hypothesis, and indicate, by reporting the total number of transmit ports in the resource pair that are supported in the frequency unit, support of total measurement complexity of the CSI associated with the NCJT measurement hypothesis, to more accurately indicate a hardware capability of the terminal device.

In a possible implementation, information that is about a maximum number of resource groups and that is reported by the terminal device corresponds to a maximum candidate value a. The maximum candidate value a is associated with a number a1 of resources. Other CSI computing capability information corresponds to a maximum candidate value b. The maximum candidate value is associated with another number b 1 of resources, and the number a1 of resources associated with the maximum candidate value a is less than or equal to the number b 1 of resources associated with the maximum candidate value b.

A number of resources corresponding to the maximum candidate value corresponding to the information that is about the maximum number of resources and that is reported by the terminal device is less than or equal to a maximum candidate value of a number of resources corresponding to the other CSI computing capability information.

A number of transmit ports in one resource corresponding to a maximum candidate value corresponding to information that is about a maximum number of transmit ports and that is reported by the terminal device is less than or equal to a maximum candidate value of a number of transmit ports corresponding to the other CSI computing capability information. A total number of ports corresponding to a maximum candidate value corresponding to information that is about a total number of first ports and that is reported by the terminal device is less than or equal to a maximum candidate value of a total number of transmit ports corresponding to the other CSI computing capability information.

In this embodiment of this application, in Implementation 1, when the first information is associated with the first resource pair information, the first indication information may directly indicate the first resource pair information, in other words, the first indication information includes information about the number of resource pairs. In Implementation 2, when the first information is associated with the number of resource pairs, the first indication information may indirectly indicate the first resource pair information, in other words, the first indication information does not include information about the number of resource pairs. The number of resource pairs associated with the first information may be a number of resource pairs supported by the terminal device in one reference signal resource set, and/or a number of resource pairs supported by the terminal device in one frequency unit.

Specifically, in Implementation 1, the first information in the first indication information may be four-tuple information, and the four-tuple information includes the first resource pair information, and at least one of the information about the number of first ports, the information about the number of first resources, or the information about the total number of first ports.

For example, one piece of four-tuple information includes four pieces of parameter information, and the one piece of four-tuple information may be represented as {P, S, T, N}. P represents the information about the number of first ports, S represents the information about the number of first resources, T represents the information about the total number of first ports, and N represents the first resource pair information.

For example, the first indication information reported by the terminal device includes two pieces of four-tuple parameter information: {8, 8, 64, 3} and {16, 4, 64, 1}. In this case, the capability of the terminal device for processing the CSI associated with the NCJT measurement hypothesis is as follows.

The terminal device performs calculation of the CSI associated with the NCJT measurement hypothesis on a maximum of three resource pairs, where a maximum number of transmit ports included in two resources associated with each resource pair is 8, and performs calculation of the CSI associated with the single-TRP measurement hypothesis on a maximum of two resources each with a maximum number of ports being 8. Alternatively, the terminal device performs calculation of the CSI associated with the NCJT measurement hypothesis on a maximum of one resource pair, where a maximum number of transmit ports included in two resources associated with each resource pair is 16, and may further perform calculation of the CSI associated with the single-TRP measurement hypothesis on a maximum of two resources each with a maximum number of ports being 16.

In Implementation 2, because the first information is associated with the number of resource pairs, and the first information in the first indication information may be a piece of triplet information. Each piece of triplet information does not include the first resource pair information, but includes at least one of the information about the number of first ports, the information about the number of first resources, or the information about the total number of first ports.

In an implementation, the first indication information may include A1 pieces of first information associated with a number of first resource pairs and A2 pieces of first information associated with a number of second resource pairs, where A1 is an integer greater than or equal to 0, and A2 is an integer greater than or equal to 0.

It is assumed that the number of first resource pairs is 2, and the number of second resource pairs is 1. The first information associated with the number of first resource pairs indicates at least one of the information about the number of first ports, the information about the number of first resources, or the information about the total number of first ports of the terminal device when the number of resource pairs is equal to 2.

Correspondingly, the first information associated with the number of second resource pairs indicates at least one of the information about the number of first ports, the information about the number of first resources, or the information about the total number of first ports of the terminal device when the number of resource pairs is equal to 1.

For example, one piece of triplet information includes three pieces of parameter information, and the one piece of triplet information may be represented as {P, S, T}. P represents the information about the number of first ports, S represents the information about the number of first resources, and T represents the information about the total number of first ports.

For example, the first indication information reported by the terminal device includes two pieces of triplet parameter information: {8, 8, 64} and {16, 4, 64}. A number of resource pairs associated with {8, 8, 64} is 2, and a number of resource pairs associated with {16, 4, 64} is 1. In this case, the capability of the terminal device for processing the CSI associated with the NCJT measurement hypothesis is as follows.

{8, 8, 64} indicates that calculation of the CSI associated with the NCJT measurement hypothesis is performed on a maximum of two resource pairs, where a maximum number of transmit ports included in two resources associated with each resource pair is 8, and calculation of the CSI associated with the single-TRP measurement hypothesis may be further performed on a maximum of six resources each with a maximum number of ports being 8. Alternatively, {8, 8, 64} indicates that calculation of the CSI associated with the NCJT measurement hypothesis is performed on a maximum of two resource pairs, where a maximum number of transmit ports included in two resources associated with each resource pair is 4, and calculation of the CSI associated with the single-TRP measurement hypothesis may be further performed on a maximum of twelve resources each with a maximum number of ports being 4.

{16, 4, 64} indicates that calculation of the CSI associated with the NCJT measurement hypothesis is performed on a maximum of one resource pair, where a maximum number of transmit ports included in two resources associated with each resource pair is 16, and calculation of the CSI associated with the single-TRP measurement hypothesis may be further performed on a maximum of two resources each with a maximum number of ports being 16.

In this embodiment of this application, the first information included in the first indication information may be capability information of different granularities, and the capability information may be CSI processing capability information.

In a possible implementation, the at least one piece of first information included in the first indication information may include CSI processing capability information of the terminal device on per band per band combination (per band per band combination).

In other words, one piece of first information in the first indication information may indicate CSI processing capability information of the terminal device on one band in one band combination, to be specific, one piece of first information may indicate one or more of a maximum number of resource pairs, a maximum number of transmit ports in one resource, a maximum number of resources, or a total number of transmit ports that correspond to the terminal device on one band in one band combination.

For example, the terminal device supports three bands: a band A, a band B, and a band C. The at least one piece of first information included in the first indication information reported by the terminal device may indicate at least one piece of the following information:

CSI processing capability information of the terminal device on each of the band A and the band B when the terminal device works on both the band A and the band B;

CSI processing capability information of the terminal device on each of the band A and the band C when the terminal device works on both the band A and the band C;

CSI processing capability information of the terminal device on each of the band B and the band C when the terminal device works on both the band B and the band C; and

CSI processing capability information of the terminal device on each of the band A, the band B, and the band C when the terminal device simultaneously works on the band A, the band B, and the band C.

It should be noted that when the terminal device works on both the band A and the band B, and when the terminal device works on both the band A and the band C, CSI processing capabilities of the terminal device on the band A may be different. Therefore, the foregoing reporting method can provide detailed and complete capability information of the terminal device.

In another possible implementation, the at least one piece of first information included in the first indication information may include capability information of the terminal device on per band and per band combination (per band and per band combination).

In other words, one piece of first information in the first indication information may indicate CSI processing capability information of the terminal device on one band combination, or one piece of first information in the first indication information may indicate CSI processing capability information of the terminal device when the terminal device independently works on one band.

For example, the terminal device supports three bands: a band A, a band B, and a band C. The at least one piece of first information included in the first indication information reported by the terminal device may indicate at least one piece of the following information:

CSI processing capability information of the terminal device when the terminal device works independently on the band A;

CSI processing capability information of the terminal device when the terminal device works independently on the band B;

CSI processing capability information of the terminal device when the terminal device works independently on the band C;

total CSI processing capability information of the terminal device in a band combination of the band A and the band B when the terminal device works on both the band A and the band B;

total CSI processing capability information of the terminal device in a band combination of the band A and the band C when the terminal device works on both the band A and the band C;

total CSI processing capability information of the terminal device in a band combination of the band B and the band C when the terminal device works on both the band B and the band C; and

total CSI processing capability information of the terminal device in a band combination of the band A, the band B, and the band C when the terminal device simultaneously works on the band A, the band B, and the band C.

According to the foregoing method, it can be ensured that signaling overheads are reduced when the terminal device reports a large amount of capability information.

S304: The network device configures a channel measurement resource for the terminal device based on the first indication information.

A specific process in which the network device configures the channel measurement resource is not described herein again. The network device obtains the first indication information. When configuring the channel measurement resource based on the first indication information, the network device may configure a corresponding channel measurement resource for the terminal device without exceeding a CSI measurement capability indicated by the first indication information, to ensure that the configured channel measurement resource does not exceed the capability reported by the terminal device, to avoid over-capability configuration.

According to the method provided in this embodiment of this application, the first indication information reported by the terminal device may indicate a number of resource pairs supported by the terminal device, to indicate the capability of the terminal device for processing the CSI associated with the NCJT measurement hypothesis, to avoid capability under-reporting when the terminal device reports only the capability of processing the CSI associated with the single-TRP measurement hypothesis.

In another aspect, the terminal device reports, based on the hardware capability of the terminal device, information about the capability of processing the CSI associated with the NCJT measurement hypothesis, and the terminal device further reports, based on the hardware capability of the terminal device, information about the capability of processing the CSI associated with the single-TRP measurement hypothesis. When the network device configures that the terminal device needs to perform calculation of the CSI associated with the single-TRP measurement hypothesis and calculation of the CSI associated with the NCJT measurement hypothesis in a same time unit, as shown in FIG. 4, the terminal device needs to simultaneously process calculation of the CSI associated with the single-TRP measurement hypothesis and calculation of the CSI associated with the NCJT measurement hypothesis in any time unit within a time interval Tx. In this case, capability under-reporting or over-capability configuration may occur.

For example, if actual hardware processing capabilities of the terminal device are: the capability of processing the CSI associated with the NCJT measurement hypothesis is {8, 4, 32} when N=1, in other words, a maximum of four NZP CSI-RS resources each with a maximum number of ports being 8 can be simultaneously processed, and calculation of the CSI including the NCJT measurement hypothesis can be performed on a maximum of one channel measurement resource pair; and the capability of processing the CSI associated with the single-TRP measurement hypothesis is {16, 4, 64}, in other words, calculation of the CSI associated with the single-TRP measurement hypothesis can be performed simultaneously based on a maximum of four NZP CSI-RS resources each with a maximum number of ports being 16, the terminal device reports the foregoing hardware capabilities to the network device, that is, separately reports a capability N=1, {8, 4, 32} of the terminal device in the NCJT measurement hypothesis, and a capability {16, 4, 64} of the terminal device in the single-TRP measurement hypothesis. The network device sends configuration information to the terminal device based on the capability reported by the terminal device. The configuration information is used to determine a first NZP CSI-RS resource set, the resource set includes four 8-port NZP CSI-RS resources. The configuration information is further used to determine two NZP CSI-RS resources from the four NZP CSI-RS resources to form one channel measurement resource pair. The first configuration information is further used to determine an interference measurement resource set associated with the NZP CSI-RS resource set, where an interference measurement resource included in the interference measurement resource set is associated with the NZP CSI-RS resource and the channel measurement resource pair. The configuration information is further used to determine a second NZP CSI-RS resource set, where the resource set includes four 16-port NZP CSI-RS resources. The configuration information is further used to determine an interference measurement resource set associated with the NZP CSI-RS resource set, where an interference measurement resource included in the interference measurement resource set is associated with the NZP CSI-RS resource.

The network device configures the terminal device to perform a measurement on the CSI associated with the NCJT measurement hypothesis on both one channel measurement resource pair that includes two 8-port NZP CSI-RS resources and that is included in the first NZP CSI-RS resource set and an interference measurement resource associated with the channel measurement resource pair, and perform a measurement on the CSI associated with the single-TRP measurement hypothesis on both the four 8-port NZP CSI-RS resources and the interference measurement resource associated with the four NZP CSI-RS resources. In addition, the network device further configures the terminal device to perform the measurement on the CSI associated with the single-TRP measurement hypothesis on the four 16-port NZP CSI-RS resources included in the second NZP CSI-RS resource set and the interference measurement resource associated with the four NZP CSI-RS resources. The configured hardware capability required for the CSI measurements is twice the actual hardware capability of the terminal device, and the terminal device actually cannot process the CSI measurements. Therefore, over-capability configuration occurs.

However, if the terminal device reports half of the actual hardware capability to the network device, that is, separately reports a capability N=1, {4, 2, 16} of processing the CSI associated with the NCJT measurement hypothesis, and a capability {8, 2, 32} of processing the CSI associated with the single-TRP measurement hypothesis, the first NZP CSI-RS resource set configured by the network device includes two 4-port NZP CSI-RS resources, where the channel measurement resource pair includes the two 4-port NZP CSI-RS resources, and the second NZP CSI-RS resource set configured by the network device includes two 8-port NZP CSI-RS resources. In this case, even if the network device does not simultaneously configure the terminal device to perform the measurement on the CSI including the NCJT measurement hypothesis on a resource corresponding to the first NZP CSI-RS resource set and perform the measurement on the CSI including the single-TRP measurement hypothesis on a resource corresponding to the second NZP CSI-RS measurement set, but configures a corresponding measurement in a time-division manner, due to a limitation of the capability reported by the terminal device, the network device can only configure, based on a channel measurement resource pair including two 4-port NZP CSI-RS resources, a measurement on the CSI associated with the NCJT measurement hypothesis, or configure, based on one NZP CSI-RS resource with a maximum of eight ports, a measurement on the CSI associated with the single-TRP measurement hypothesis. Only half of the hardware capability of the terminal device can be used, resulting in capability under-reporting.

To avoid that when measurements on CSI associated with different measurement hypotheses are simultaneously configured, complexity corresponding to the measurements exceeds the hardware capability of the terminal device, when reporting a measurement capability of the CSI associated with the single-TRP measurement hypothesis and a measurement capability of the CSI associated with the NCJT measurement hypothesis, the terminal device chooses to report information about a capability that is lower than the capability of the terminal device, causing capability under-reporting. Alternatively, when reporting a measurement capability of the CSI associated with the single-TRP measurement hypothesis and a measurement capability of the CSI associated with the NCJT measurement hypothesis, the terminal device does not consider a case in which measurements on CSI associated with different measurement hypotheses are simultaneously configured, but directly reports, based on the hardware capability of the terminal device, the measurement capability of the CSI associated with the single-TRP measurement hypothesis and the measurement capability of the CSI associated with the NCJT measurement hypothesis. The network device configures the terminal device to perform both the measurement on the CSI associated with the single-TRP measurement hypothesis and the measurement on the CSI associated with the NCJT measurement hypothesis. As a result, total complexity required for measurements that are on the CSI associated with different measurement hypotheses and that are configured at the same time exceeds the capability of the terminal device, resulting in over-capability configuration. To avoid the foregoing capability under-reporting and over-capability configuration, in this embodiment of this application, the terminal device may further send second indication information to the network device, where the second indication information may indicate a corresponding CSI processing capability of the terminal device when the terminal device performs hybrid scheduling in a case of the NCJT measurement hypothesis and different codebook types. The second indication information includes at least one of at least one piece of second information and at least one piece of third information.

The second information indicates at least one of a CSI measurement and a codebook combination that are supported by the terminal device in a same time unit. The third information indicates one or more pieces of information about a number of second resource pairs and one or more pieces of the following information associated with each piece of information about the number of second resource pairs: information about a number of second ports, information about a number of second resources, and information about a total number of second ports. The CSI measurement includes at least a joint CSI measurement on a resource pair. The time unit is one or more slots (slots), or the time unit is one or more mini slots (mini slots), or the time unit is one or more symbols (symbols).

In an implementation, one piece of second information may have an association relationship with one piece of third information. In other words, parameters included in the third information are capability parameters of the CSI measurement and the codebook combination that are supported by the terminal device and indicated by the second information.

The parameters included in the third information are the capability parameters of the CSI measurement and the codebook combination that are supported by the terminal device and indicated by the second information. The first resource pair information and the first information that are included in the first indication information are used to determine, in a case of the CSI measurement and the codebook combination that are supported by the terminal device and indicated by the second information, the capability parameter of the CSI measurement supported by the terminal device. To be specific, in a case of the CSI measurement and the codebook combination that are supported by the terminal device and indicated by the second information, a total capability of the CSI measurement supported by the terminal device is determined by the third information, and a capability of the joint CSI measurement is determined by the first indication information. In other words, the network device simultaneously configures the CSI measurement and the codebook combination that are supported by the terminal device and indicated by the second information, and a total CSI resource configuration cannot exceed a capability parameter indicated by the third information, and a CSI resource configuration corresponding to the joint CSI measurement cannot exceed a capability parameter indicated by the first indication information.

In this embodiment of this application, a codebook in the codebook combination may include one or more of the following:

    type I single-panel codebook (Type I Single-Panel codebook);
    type I multi-panel codebook (Type I Multi-Panel codebook);
    type II codebook (Type II codebook);
    type II port selection codebook (Type II port selection codebook);
    enhanced type II codebook with R=1 (Enhanced Type II codebook with R=1);
    enhanced type II codebook with R=2 (Enhanced Type II codebook with R=2);
    enhanced type II codebook with R=1 with port selection (Enhanced Type II codebook with R=1 with port selection); and
    enhanced type II codebook with R=2 with port selection (Enhanced Type II codebook with R=2 with port selection),
    where R=1 indicates that a subband size of a PMI is equal to a subband size configured by the network device; and
    R=2 indicates that the subband size of the PMI is equal to half of the subband size configured by the network device.

For example, the codebook combination may be any one of the following combinations:

Codebook combination 1: {type I single-panel codebook, type II codebook, Null}, where Null indicates that no codebook is configured;
Codebook combination 2: {type I single-panel codebook, type II port selection codebook, Null};
Codebook combination 3: {type I single-panel codebook, enhanced type II codebook with R=1, Null};
Codebook combination 4: {type I single-panel codebook, enhanced type II codebook with R=2, Null};
Codebook combination 5: {type I single-panel codebook, enhanced type II codebook with R=1 with port selection, Null};
Codebook combination 6: {type I single-panel codebook, enhanced type II codebook with R=2 with port selection, Null};
Codebook combination 7: {type I single-panel codebook, type II codebook, type II port selection codebook};
Codebook combination 8: {type I multi-panel codebook, type II codebook, Null};
Codebook combination 9: {type I multi-panel codebook, type II port selection codebook, Null};
Codebook combination 10: {type I multi-panel codebook, enhanced type II codebook with R=1, Null};
Codebook combination 11: {type I multi-panel codebook, enhanced type II codebook with R=2, Null};
Codebook combination 12: {type I multi-panel codebook, enhanced type II codebook with R=1 with port selection, Null};
Codebook combination 13: {type I multi-panel codebook, enhanced type II codebook with R=2 with port selection, Null}; and
Codebook combination 14: {type I multi-panel codebook, type II codebook, type II port selection codebook}.

In this embodiment of this application, the third information may include at least one piece of fourth information and at least one piece of second resource pair information, and one piece of fourth information is associated with one piece of second resource pair information. Alternatively, the third information includes at least one piece of fourth information, and one piece of fourth information is associated with a number of resource pairs. For example, the number of resource pairs may be 1 or 2.

The second resource pair information indicates a number of resource pairs supported by the terminal device in one reference signal resource set, and/or a total number of resource pairs supported by the terminal device in one frequency unit.

The fourth information includes at least one of the following information:

the information about the number of second ports, indicating a maximum number of transmit ports in one resource, and/or a maximum number of transmit ports in one resource within a resource pair, the information about the number of second resources, indicating a number of reference signal resources that can be supported by the terminal device in one frequency unit, and the information about the total number of second ports, indicating a total number of ports supported by the terminal device in one frequency unit, and/or a total number of ports in a resource pair that are supported by the terminal device in one frequency unit.

With reference to the foregoing descriptions, when the codebook combination indicated by the second indication information includes the type I single-panel codebook, and a CSI measurement based on the type I SP codebook and a CSI measurement based on another type of codebook coexist in a same time unit, the third information associated with the second indication information may indicate a maximum number of resource pairs associated with the CSI measurement performed based on the type I SP codebook. The information that is about the number of second ports and that is indicated by the third information associated with the second indication information indicates information about a maximum number of resources and indicates a maximum number of transmit ports in one resource. The information that is about the number of second resources and that is indicated by the third information associated with the second indication information indicates a maximum number of resources. The information that is about the total number of second ports and that is indicated by the third information associated with the second indication information indicates the total number of transmit ports.

When the codebook combination indicated by the second indication information includes Type I MP, Type II, Type II with port selection, eType II with R=1, eType II with R=2, eType II with R=1 and port selection, or eType II with R=2 and port selection, the third information associated with the second indication information may indicate a maximum number of resource pairs associated with a CSI measurement performed based on the codebook, and may indicate one or more of information about a maximum number of transmit ports in one resource, information about a maximum number of resources, or information about a total number of transmit ports.

In this embodiment of this application, the second indication information may be capability information of different granularities. In a possible implementation, the at least one piece of second information and the at least one piece of third information that are included in the second indication information include capability information of the terminal device on per band per band combination (per band per band combination). In other words, one piece of second information and one piece of third information in the second indication information may indicate CSI processing capability information of the terminal device on a band in a band combination in a case of one codebook combination supported by the terminal device.

In another possible implementation, the at least one piece of second information and the at least one piece of third information that are included in the second indication information may include capability information of the terminal device on per band and per band combination (per band and per band combination). In other words, one piece of second information and one piece of third information in the second indication information may indicate CSI processing capability information of the terminal device on a band combination in a case of one codebook combination supported by the terminal device, or one piece of second information and one piece of third information in the second indication information may indicate CSI processing capability information of the terminal device when the terminal device independently works on a band in a case of one codebook combination supported by the terminal device.

According to the method provided in this embodiment of this application, the second indication information reported by the terminal device may indicate a corresponding CSI processing capability of the terminal device when the terminal device performs hybrid scheduling in a case of the NCJT measurement hypothesis and different codebook combinations. This may avoid capability under-reporting when the terminal device separately reports only the capability of processing the CSI associated with the single-TRP measurement hypothesis and the capability of processing the CSI associated with the NCJT measurement hypothesis. Correspondingly, when performing CSI measurement configuration based on the second indication information, the network device may configure, based on a case of not exceeding the CSI measurement capability indicated by the second indication information, channel measurement resources used by the terminal device to simultaneously perform the measurements on the CSI associated with the single-TRP measurement hypothesis and the NCJT measurement hypothesis, to ensure that a total number of channel measurement resources corresponding to the measurements on the CSI associated with different measurement hypotheses does not exceed a capability reported by the terminal device, to avoid over-capability configuration.

In this embodiment of this application, the terminal device may further send third indication information to the network device. The third indication information may indicate the capability of the terminal device for processing the CSI associated with the single-TRP measurement hypothesis.

The third indication information may include at least one piece of fifth information, and the fifth information may include one or more of the following information:

information about a number of third ports, information about a number of third resources, or information about a total number of third ports.

The information about the number of third ports indicates a maximum number of transmit ports supported by the terminal device in one resource, and/or a maximum number of transmit ports supported by the terminal device in one resource within a resource pair. The information about the number of third resources indicates a number of reference signal resources that can be supported by the terminal device in one frequency unit. The information about the total number of third ports indicates a total number of ports supported by the terminal device in one frequency unit, and/or a total number of ports in a resource pair that are supported by the terminal device in one frequency unit.

For example, the third indication information reported by the terminal device includes three pieces of fifth information: {8, 8, 64}, {16, 4, 64}, and {32, 2, 64}. {8, 8, 64} indicates that a maximum number of transmit ports simultaneously supported by the terminal device in one resource is 8, a number of reference signal resources that can be simultaneously supported in one frequency unit is 8, and a total number of ports simultaneously supported in one frequency unit is 64.

{16, 4, 64} indicates that a maximum number of transmit ports simultaneously supported by the terminal device in one resource is 16, a number of reference signal resources that can be simultaneously supported in one frequency unit is 4, and a total number of ports simultaneously supported in one frequency unit is 64.

{32, 2, 64} indicates that a maximum number of transmit ports simultaneously supported by the terminal device in one resource is 32, a number of reference signal resources that can be simultaneously supported in one frequency unit is 2, and a total number of ports simultaneously supported in one frequency unit is 64.

In this embodiment of this application, the terminal device may further obtain CSI configuration information from the network device. The CSI configuration information may include CSI reporting configuration information and CSI resource configuration information.

The CSI reporting configuration information may include CSI codebook information. The CSI codebook information is used to determine a codebook type during a CSI measurement. The CSI resource configuration information is used to determine an NZP CSI-RS resource set used for channel measurement, a CSI-IM resource set used for interference measurement, and/or an NZP CSI-RS resource set used for interference measurement.

The NZP CSI-RS resource set used for channel measurement includes a plurality of NZP CSI-RS resources used for channel measurement and/or NZP CSI-RS resource pairs used for channel measurement. The NZP CSI-RS resources used for channel measurement and/or a number of resources corresponding to the NZP CSI-RS resource pairs used for channel measurement, a number of resource pairs, a total number of transmit ports, or a maximum number of transmit ports do not exceed the reporting capability of the terminal device.

The terminal device may measure a reference signal based on the CSI configuration information, to obtain the CSI, and report the CSI to the network device. A specific process is not described herein in this application.

The foregoing embodiments may be separately implemented, or may be implemented in combination with each other. In the foregoing different embodiments, differences among the embodiments are described in detail. Except for other content of the differences, for other content between different embodiments, reference may be made to each other. It should be noted that step numbers in the flowcharts described in embodiments of this application are merely an example of an execution procedure, and do not constitute any limitation on an execution sequence of the steps. In embodiments of this application, there is no strict execution sequence between steps that do not have a time sequence dependency relationship with each other. In addition, not all the steps shown in the flowcharts are mandatory steps, and some steps may be added to or deleted from the flowcharts based on an actual requirement.

To implement functions in the method provided in the foregoing embodiments of this application, an access network device, a terminal device, or the foregoing communication apparatus may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Division into modules in embodiments of this application is an example, and is merely logical function division. During actual implementation, there may be another division manner. In addition, functional modules in embodiments of this application may be integrated into one processor, or may exist alone physically, or two or more modules are integrated into one module. The integrated module may be implemented in a form of hardware, or may be implemented in a form of a software functional module.

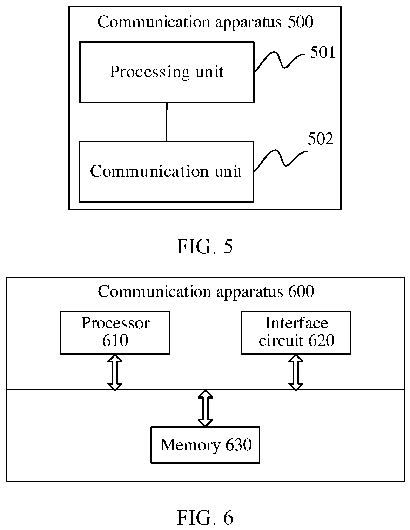

Same as the foregoing concept, as shown in FIG. 5, an embodiment of this application further provides a communication apparatus 500. The communication apparatus 500 may be the terminal device in FIG. 1, and is configured to implement the method corresponding to the terminal device in the foregoing method embodiments. The communication apparatus may be the TRP in FIG. 1, and is configured to implement the method corresponding to the network device in the foregoing method embodiments. For a specific function, refer to the descriptions in the foregoing method embodiments.

Specifically, the communication apparatus 500 may include a processing unit 501 and a communication unit 502. In this embodiment of this application, the communication unit may also be referred to as a transceiver unit, and may include a sending unit and/or a receiving unit, which are respectively configured to perform sending and receiving steps of the network device or the terminal device in the foregoing method embodiments. The following describes in detail communication apparatuses provided in embodiments of this application with reference to FIG. 5 and FIG. 6.

In some possible implementations, the processing unit is configured to generate first indication information, where the first indication information includes at least one piece of first information and at least one piece of first resource pair information, and one piece of first information is associated with one piece of first resource pair information; or the first indication information includes at least one piece of first information, and one piece of first information is associated with a number of resource pairs.

The first resource pair information indicates a number of resource pairs supported by the terminal device in one reference signal resource set, and/or a number of resource pairs supported by the terminal device in one frequency unit.

The first information includes at least one or more of information about a number of first ports, information about a number of first resources, or information about a total number of first ports.

The communication unit is configured to send the first indication information.

In a possible implementation, the frequency unit is one or more carriers, the frequency unit is one or more bands (bands), the frequency unit is one or more band combinations (band combinations, BCs), or the frequency unit is one or more bandwidth parts (bandwidth parts, BWPs).

In a possible implementation, the information about the number of first ports indicates a maximum number of transmit ports in one resource, and/or a maximum number of transmit ports in one resource within a resource pair.

In a possible implementation, the information about the number of first resources indicates a number of reference signal resources that can be supported by the terminal device in one frequency unit.

In a possible implementation, the information about the total number of first ports indicates a total number of ports supported by the terminal device in one frequency unit, and/or a total number of ports in a resource pair that are supported by the terminal device in one frequency unit.

In a possible implementation, the first indication information includes capability information per band per band combination.

Alternatively, the first indication information includes capability information per band and per band combination.

In a possible implementation, the communication unit is further configured to send second indication information, where the second indication information includes at least one of at least one piece of second information and at least one piece of third information.

The second information indicates a channel state information CSI measurement and a codebook combination that are supported by the terminal device in a same time unit, where the CSI measurement includes at least a joint CSI measurement on a resource pair, and the codebook combination includes one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection.

The third information includes at least one piece of fourth information and at least one piece of second resource pair information, and one piece of fourth information is associated with one piece of second resource pair information; or the third information includes at least one piece of fourth information, and one piece of fourth information is associated with a number of resource pairs; and the fourth information includes at least one or more of information about a number of second ports, information about a number of second resources, and information about a total number of second ports. Parameters included in the third information are capability parameters of the CSI measurement and the codebook combination that are supported by the terminal device and indicated by the second information. The information about the number of first resource pairs and the first information that are included in the first indication information are used to determine, in a case of the CSI measurement and the codebook combination that are supported by the terminal device and indicated by the second information, a capability parameter of the CSI measurement supported by the terminal device.

In a possible implementation, the information about the number of second ports indicates a maximum number of transmit ports in one resource, and/or a maximum number of transmit ports in one resource within a resource pair. The information about the number of second resources indicates a number of reference signal resources that can be supported by the terminal device in one frequency unit. The information about the total number of second ports indicates a total number of ports supported by the terminal device in one frequency unit, and/or a total number of ports in a resource pair that are supported by the terminal device in one frequency unit.

In a possible implementation, the second indication information includes capability information per band per band combination.

Alternatively, the second indication information includes capability information per band and per band combination.

In some possible implementations, behaviors and functions of the access network device in the foregoing method embodiment may be implemented by using the communication apparatus 500, for example, the method performed by the network device in the embodiment in FIG. 3. For example, the communication apparatus 500 may be a network device, a component (for example, a chip or a circuit) used in a network device, a chip or a chip set in a network device, or a part that is of a chip and that is configured to perform a related method function. The communication unit 502 may be configured to perform a receiving or sending operation performed by the network device in the embodiment shown in FIG. 3, and the processing unit 501 may be configured to perform an operation other than the receiving or sending operation performed by the network device in the embodiment shown in FIG. 3.

In a possible implementation, the communication unit is configured to receive first indication information from a terminal device, where the first indication information includes at least one piece of first information and at least one piece of first resource pair information, and one piece of first information is associated with one piece of first resource pair information; or the first indication information includes at least one piece of first information, and one piece of first information is associated with a number of resource pairs. The first resource pair information indicates a number of resource pairs supported by the terminal device in one reference signal resource set, and/or a number of resource pairs supported by the terminal device in one frequency unit.

The first information includes at least one or more of information about a number of first ports, information about a number of first resources, or information about a total number of first ports.

The processing unit is configured to configure channel measurement resource for the terminal device based on the first indication information.

In a possible implementation, the frequency unit is one or more carriers, the frequency unit is one or more bands (bands), the frequency unit is one or more band combinations (band combinations, BCs), or the frequency unit is one or more bandwidth parts (bandwidth parts, BWPs).

In a possible implementation, the information about the number of first ports indicates a maximum number of transmit ports in one resource, and/or a maximum number of transmit ports in one resource within a resource pair.

In a possible implementation, the information about the number of first resources indicates a number of reference signal resources that can be supported by the terminal device in one frequency unit.

In a possible implementation, the information about the total number of first ports indicates a total number of ports supported by the terminal device in one frequency unit, and/or a total number of ports in a resource pair that are supported by the terminal device in one frequency unit.

In a possible implementation, the first indication information includes capability information per band per band combination.

Alternatively, the first indication information includes capability information per band and per band combination.

In a possible implementation, the communication unit is configured to receive second indication information from the terminal device, where the second indication information includes at least one piece of second information and at least one piece of third information. The second information indicates a channel state information CSI measurement and a codebook combination that are supported by the terminal device in a same time unit, where the CSI measurement includes at least a joint CSI measurement on a resource pair, and the codebook combination includes one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection.

The third information includes at least one piece of fourth information and at least one piece of second resource pair information, and one piece of fourth information is associated with one piece of second resource pair information; or the third information includes at least one piece of fourth information, and one piece of fourth information is associated with a number of resource pairs; and the fourth information includes at least one or more of information about a number of second ports, information about a number of second resources, and information about a total number of second ports.

Parameters included in the third information are the capability parameters of the CSI measurement and the codebook combination that are supported by the terminal device and indicated by the second information. The information about the number of first resource pairs and the first information that are included in the first indication information are used to determine, in a case of the CSI measurement and the codebook combination that are supported by the terminal device and indicated by the second information, a capability parameter of the CSI measurement supported by the terminal device.

In a possible implementation, the information about the number of second ports indicates a maximum number of transmit ports in one resource, and/or a maximum number of transmit ports in one resource within a resource pair. The information about the number of second resources indicates a number of reference signal resources that can be supported by the terminal device in one frequency unit. The information about the total number of second ports indicates a total number of ports supported by the terminal device in one frequency unit, and/or a total number of ports in a resource pair that are supported by the terminal device in one frequency unit.

In a possible implementation, the second indication information includes capability information per band per band combination.

Alternatively, the second indication information includes capability information per band and per band combination.

It should be understood that descriptions of the apparatus embodiments correspond to the descriptions of the method embodiments. For an apparatus structure used to implement the terminal device and the network device in FIG. 3, refer to the communication apparatus 500. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 502 and that is configured to implement a receiving function may be considered as a receiving unit, and a component that is in the communication unit 502 and that is configured to implement a sending function may be considered as a sending unit. In other words, the communication unit 502 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter, a transmitter machine, a transmitter circuit, or the like.

The foregoing is merely an example. The processing unit 501 and the communication unit 502 may further perform other functions. For more detailed descriptions, refer to related descriptions in the method embodiment shown in FIG. 3. Details are not described herein again.

FIG. 6 shows a communication apparatus 600 according to an embodiment of this application. The communication apparatus shown in FIG. 6 may be an implementation of a hardware circuit of the communication apparatus shown in FIG. 5. The communication apparatus is applicable to the foregoing flowchart, and performs the functions of the terminal device or the network device in the foregoing method embodiments. For ease of description, FIG. 6 shows only main components of the communication apparatus.

As shown in FIG. 6, the communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions to be executed by the processor 610, store input data required for running instructions by the processor 610, or store data generated after the processor 610 runs instructions.

When the communication apparatus 600 is configured to implement the method shown in FIG. 3, the processor 610 is configured to perform a function of the processing unit 501, and the interface circuit 620 is configured to perform a function of the communication unit 502.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, or a transistor logic device. The general-purpose processor may be a microprocessor or any regular processor.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include compute-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of the claims of this application and equivalent technologies thereof.

**Claims**

1. An information transmission method, applied to a terminal device, and comprising:

   generating first indication information, wherein the first indication information comprises at least one piece of first information and at least one piece of first resource pair information, and one piece of first information is associated with one piece of first resource pair information; or the first indication information comprises at least one piece of first information, and one piece of first information is associated with a number of resource pairs;

the first resource pair information indicates a number of resource pairs supported by the terminal device in one reference signal resource set, and/or a number of resource pairs supported by the terminal device in one frequency unit; and

the first information comprises at least one or more of information about a number of first ports, information about a number of first resources, or information about a total number of first ports; and

sending the first indication information.

2. The method according to claim 1, wherein the frequency unit is one or more carriers, the frequency unit is one or more bands, the frequency unit is one or more band combinations, or the frequency unit is one or more bandwidth parts.

3. The method according to claim 1 or 2, wherein the information about the number of first ports indicates a maximum number of transmit ports in one resource, and/or a maximum number of transmit ports in one resource within a resource pair.

4. The method according to any one of claims 1 to 3, wherein the information about the number of first resources indicates a number of reference signal resources that can be supported by the terminal device in one frequency unit.

5. The method according to any one of claims 1 to 4, wherein the information about the total number of first ports indicates a total number of ports supported by the terminal device in one frequency unit, and/or a total number of ports in a resource pair that are supported by the terminal device in one frequency unit.

6. The method according to any one of claims 1 to 5, wherein the method further comprises:

sending second indication information, wherein the second indication information comprises at least one of at least one piece of second information and at least one piece of third information;

the second information indicates a channel state information CSI measurement and a codebook combination that are supported by the terminal device in a same time unit, wherein the CSI measurement comprises at least a joint CSI measurement on a resource pair, and the codebook combination comprises one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection, wherein R=1 indicates that a subband size indicated by a precoding matrix is equal to a subband size configured by a network device, and R=2 indicates that the subband size indicated by the precoding matrix is equal to a half of the subband size configured by the network device;

the third information comprises at least one piece of fourth information and at least one piece of second resource pair information, and one piece of fourth information is associated with one piece of second resource pair information; or the third information comprises at least one piece of fourth information, and one piece of fourth information is associated with a number of resource pairs; and the fourth information comprises at least one or more of information about a number of second ports, information about a number of second resources, and information about a total number of second ports;

parameters comprised in the third information are capability parameters of the CSI measurement and the codebook combination that are supported by the terminal device and indicated by the second information; and

the information about the number of first resource pairs and the first information that are comprised in the first indication information are used to determine, in a case of the CSI measurement and the codebook combination that are supported by the terminal device and indicated by the second information, the capability parameter of the CSI measurement supported by the terminal device.

7. The method according to claim 6, wherein the information about the number of second ports indicates a maximum number of transmit ports in one resource, and/or a maximum number of transmit ports in one resource within a resource pair;

the information about the number of second resources indicates a number of reference signal resources that can be supported by the terminal device in one frequency unit; and

the information about the total number of second ports indicates a total number of ports supported by the terminal device in one frequency unit, and/or a total number of ports in a resource pair that are supported by the terminal device in one frequency unit.

8. An information transmission method, applied to a network device, and comprising:

receiving first indication information from a terminal device, wherein the first indication information comprises at least one piece of first information and at least one piece of first resource pair information, and one piece of first information is associated with one piece of first resource pair information; or the first indication information comprises at least one piece of first information, and one piece of first information is associated with a number of resource pairs;

the first resource pair information indicates a number of resource pairs supported by the terminal device in one reference signal resource set, and/or a number of resource pairs supported by the terminal device in one frequency unit; and

the first information comprises at least one or more of information about a number of first ports, information about a number of first resources, or information about a total number of first ports; and

configuring a channel measurement resource for the terminal device based on the first indication information.

9. The method according to claim 8, wherein the frequency unit is one or more carriers, the frequency unit is one or more bands, the frequency unit is one or more band combinations, or the frequency unit is one or more bandwidth parts.

10. The method according to claim 8 or 9, wherein the information about the number of first ports indicates a maximum number of transmit ports one resource, and/or a maximum number of transmit ports in one resource within a resource pair.

11. The method according to any one of claims 8 to 10, wherein the information about the number of first resources indicates a number of reference signal resources that can be supported by the terminal device in one frequency unit.

12. The method according to any one of claims 8 to 11, wherein the information about the total number of first ports indicates a total number of ports supported by the terminal device in one frequency unit, and/or a total number of ports in a resource pair that are supported by the terminal device in one frequency unit.

13. The method according to any one of claims 8 to 12, wherein the method further comprises:

receiving second indication information from the terminal device, wherein the second indication information comprises at least one of at least one piece of second information and at least one piece of third information;

the second information indicates a channel state information CSI measurement and a codebook combination that are supported by the terminal device in a same time unit, wherein the CSI measurement comprises at least a joint CSI measurement on a resource pair, and the codebook combination comprises one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection, wherein R=1 indicates that a subband size indicated by a precoding matrix is equal to a subband size configured by a network device, and R=2 indicates that the subband size indicated by the precoding matrix is equal to a half of the subband size configured by the network device;

the third information comprises at least one piece of fourth information and at least one piece of second resource pair information, and one piece of fourth information is associated with one piece of second resource pair information; or the third information comprises at least one piece of fourth information, and one piece of fourth information is associated with a number of resource pairs; and the fourth information comprises at least one or more of information about a number of second ports, information about a number of second resources, and information about a total number of second ports;

parameters comprised in the third information are capability parameters of the CSI measurement and the codebook combination that are supported by the terminal device and indicated by the second information; and the information about the number of first resource pairs and the first information that are comprised in the first indication information are used to determine, in a case of the CSI measurement and the codebook combination that are supported by the terminal device and indicated by the second information, the capability parameter of the CSI measurement supported by the terminal device.

14. The method according to claim 13, wherein the information about the number of second ports indicates a maximum number of transmit ports in one resource, and/or a maximum number of transmit ports in one resource within a resource pair;

the information about the number of second resources indicates a number of reference signal resources that can be supported by the terminal device in one frequency unit; and

the information about the total number of second ports indicates a total number of ports supported by the terminal device in one frequency unit, and/or a total number of ports in a resource pair that are supported by the terminal device in one frequency unit.

15. A communication apparatus, comprising:

a processing unit, configured to generate first indication information, wherein the first indication information comprises at least one piece of first information and at least one piece of first resource pair information, and one piece of first information is associated with one piece of first resource pair information; or the first indication information comprises at least one piece of first information, and one piece of first information is associated with a number of resource pairs;

the first resource pair information indicates a number of resource pairs supported by the terminal device in one reference signal resource set, and/or a number of resource pairs supported by the terminal device in one frequency unit; and

the first information comprises at least one or more of information about a number of first ports, information about a number of first resources, or information about a total number of first ports; and

a communication unit, configured to send the first indication information.

16. The apparatus according to claim 15, wherein the frequency unit is one or more carriers, the frequency unit is one or more bands, the frequency unit is one or more band combinations, or the frequency unit is one or more bandwidth parts.

17. The apparatus according to claim 15 or 16, wherein the information about the number of first ports indicates a maximum number of transmit ports in one resource, and/or a maximum number of transmit ports one resource within a resource pair.

18. The apparatus according to any one of claims 15 to 17, wherein the information about the number of first resources indicates a number of reference signal resources that can be supported by the terminal device in one frequency unit.

19. The apparatus according to any one of claims 15 to 18, wherein the information about the total number of first ports indicates a total number of ports supported by the terminal device in one frequency unit, and/or a total number of ports in a resource pair that are supported by the terminal device in one frequency unit.

20. The apparatus according to any one of claims 15 to 19, wherein the communication unit is further configured to:

send second indication information, wherein the second indication information comprises at least one of at least one piece of second information and at least one piece of third information;

the second information indicates a channel state information CSI measurement and a codebook combination that are supported by the terminal device in a same time unit, wherein the CSI measurement comprises at least a joint CSI measurement on a resource pair, and the codebook combination comprises one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection, wherein R=1 indicates that a subband size indicated by a precoding matrix is equal to a subband size configured by a network device, and R=2 indicates that the subband size indicated by the precoding matrix is equal to a half of the subband size configured by the network device;

the third information comprises at least one piece of fourth information and at least one piece of second resource pair information, and one piece of fourth information is associated with one piece of second resource pair information; or the third information comprises at least one piece of fourth information, and one piece of fourth information is associated with a number of resource pairs; and the fourth information comprises at least one or more of information about a number of second ports, information about a number of second resources, and information about a total number of second ports;

parameters comprised in the third information are capability parameters of the CSI measurement and the codebook combination that are supported by the terminal device and indicated by the second information; and the information about the number of first resource pairs and the first information that are comprised in the first indication information are used to determine, in a case of the CSI measurement and the codebook combination that are supported by the terminal device and indicated by the second information, the capability parameter of the CSI measurement supported by the terminal device.

21. The apparatus according to claim 19, wherein the information about the number of second ports indicates a maximum number of transmit ports in one resource, and/or a maximum number of transmit ports in one resource within a resource pair;

the information about the number of second resources indicates a number of reference signal resources that can be supported by the terminal device in one frequency unit; and
the information about the total number of second ports indicates a total number of ports supported by the terminal device in one frequency unit, and/or a total number of ports in a resource pair that are supported by the terminal device in one frequency unit.

22. A communication apparatus, comprising:

a communication unit, configured to receive first indication information from a terminal device, wherein the first indication information comprises at least one piece of first information and at least one piece of first resource pair information, and one piece of first information is associated with one piece of first resource pair information; or the first indication information comprises at least one piece of first information, and one piece of first information is associated with a number of resource pairs;
the first resource pair information indicates a number of resource pairs supported by the terminal device in one reference signal resource set, and/or a number of resource pairs supported by the terminal device in one frequency unit; and
the first information comprises at least one or more of information about a number of first ports, information about a number of first resources, or information about a total number of first ports; and
a processing unit, configured to configure a channel measurement resource for the terminal device based on the first indication information.

23. The apparatus according to claim 22, wherein the frequency unit is one or more carriers, the frequency unit is one or more bands, the frequency unit is one or more band combinations, or the frequency unit is one or more bandwidth parts.

24. The apparatus according to claim 22 or 23, wherein the information about the number of first ports indicates a maximum number of transmit ports in one resource, and/or a maximum number of transmit ports in one resource within a resource pair.

25. The apparatus according to any one of claims 22 to 24, wherein the information about the number of first resources indicates a number of reference signal resources that can be supported by the terminal device in one frequency unit.

26. The apparatus according to any one of claims 22 to 25, wherein the information about the total number of first ports indicates a total number of ports supported by the terminal device in one frequency unit, and/or a total number of ports in a resource pair that are supported by the terminal device in one frequency unit.

27. The apparatus according to any one of claims 22 to 26, wherein the communication unit is further configured to:

receive second indication information from the terminal device, wherein the second indication information comprises at least one of at least one piece of second information and at least one piece of third information;
the second information indicates a channel state information CSI measurement and a codebook combination that are supported by the terminal device in a same time unit, wherein the CSI measurement comprises at least a joint CSI measurement on a resource pair, and the codebook combination comprises one or more of the following: a type I single-panel codebook, a type I multi-panel codebook, a type II codebook, a type II port selection codebook, an enhanced type II codebook with R=1, an enhanced type II codebook with R=2, an enhanced type II codebook with R=1 with port selection, and an enhanced type II codebook with R=2 with port selection, wherein R=1 indicates that a subband size indicated by a precoding matrix is equal to a subband size configured by a network device, and R=2 indicates that the subband size indicated by the precoding matrix is equal to a half of the subband size configured by the network device;
the third information comprises at least one piece of fourth information and at least one piece of second resource pair information, and one piece of fourth information is associated with one piece of second resource pair information; or the third information comprises at least one piece of fourth information, and one piece of fourth information is associated with a number of resource pairs; and the fourth information comprises at least one or more of information about a number of second ports, information about a number of second resources, and information about a total number of second ports;

parameters comprised in the third information are capability parameters of the CSI measurement and the codebook combination that are supported by the terminal device and indicated by the second information; and the information about the number of first resource pairs and the first information that are comprised in the first indication information are used to determine, in a case of the CSI measurement and the codebook combination that are supported by the terminal device and indicated by the second information, the capability parameter of the CSI measurement supported by the terminal device.

28. The apparatus according to claim 27, wherein the information about the number of second ports indicates a maximum number of transmit ports in one resource, and/or a maximum number of transmit ports in one resource within a resource pair;

the information about the number of second resources indicates a number of reference signal resources that can be supported by the terminal device in one frequency unit; and
the information about the total number of second ports indicates a total number of ports supported by the terminal device in one frequency unit, and/or a total number of ports in a resource pair that are supported by the terminal device in one frequency unit.

29. A communication apparatus, comprising a processor and a memory, wherein
the processor is configured to execute a computer program or instructions stored in the memory, so that the communication apparatus implements the method according to any one of claims 1 to 7.

30. A communication apparatus, comprising a processor and a memory, wherein
the processor is configured to execute a computer program or instructions stored in the memory, so that the communication apparatus implements the method according to any one of claims 8 to 14.

31. A computer-readable storage medium, storing a computer program or instructions, wherein when the computer program or the instructions is/are run on a computer, the computer is enabled to implement the method according to any one of claims 1 to 14.

32. A chip, comprising a processor, wherein the processor is coupled to a memory, and is configured to execute a computer program or instructions stored in the memory, so that the chip implements the method according to any one of claims 1 to 14.

FIG. 1

FIG. 2

```
┌─────────────┐                                    ┌─────────────┐
│  Terminal   │                                    │  Network    │
│  device     │                                    │  device     │
└─────────────┘                                    └─────────────┘
       │                                                  │
┌──────────────────────┐                                  │
│ S301: The network     │                                 │
│ device generates      │                                 │
│ first indication      │                                 │
│ information           │                                 │
└──────────────────────┘                                  │
       │                                                  │
┌──────────────────────┐                                  │
│ S302: The terminal    │                                 │
│ device sends the      │                                 │
│ first indication      │                                 │
│ information to the    │                                 │
│ network device        │                                 │
└──────────────────────┘                                  │
       │        First indication information              │
       │ ───────────────────────────────────────────────▶│
       │                                          ┌──────────────────────┐
       │                                          │ S303: The network     │
       │                                          │ device receives the   │
       │                                          │ first indication      │
       │                                          │ information from the  │
       │                                          │ terminal device       │
       │                                          └──────────────────────┘
       │                                                  │
       │                                          ┌──────────────────────┐
       │                                          │ S304: The network     │
       │                                          │ device configures a   │
       │                                          │ measurement           │
       │                                          │ resource for the      │
       │                                          │ terminal device based │
       │                                          │ on the first          │
       │                                          │ indication information │
       │                                          └──────────────────────┘
```

FIG. 3

```
┌─────────────────────────────┐
│ Report of CSI associated     │
│ with an NCJT measurement     │
│ hypothesis                   │
└─────────────────────────────┘
              │
              │   ┌─────────────────────────────┐
              │   │ Report of CSI associated     │
              │   │ with a single-TRP            │
              │   │ measurement hypothesis       │
              │   └─────────────────────────────┘
              │                    │
──────────────┼────────────────────┼──────────────────────▶
              │◀──────────────────▶│
              │        Tx          │
```

FIG. 4

Communication apparatus 500

Processing unit 501

Communication unit 502

FIG. 5

Communication apparatus 600

Processor 610

Interface circuit 620

Memory 630

FIG. 6

## INTERNATIONAL SEARCH REPORT

| | International application No. |
|---|---|
| | **PCT/CN2022/107819** |

| **A. CLASSIFICATION OF SUBJECT MATTER** |
|---|
| H04W 24/10(2009.01)i |
| According to International Patent Classification (IPC) or to both national classification and IPC |

| **B. FIELDS SEARCHED** |
|---|
| Minimum documentation searched (classification system followed by classification symbols) |
| H04W |
| Documentation searched other than minimum documentation to the extent that such documents are included in the fields searched |
| |
| Electronic data base consulted during the international search (name of data base and, where practicable, search terms used) |
| CNABS; CNTXT; CNKI; VEN; USTXT; WOTXT; EPTXT; 3GPP: 端口, 资源对, 指示, 参考信号, 资源集, 频率, 个数, 关联, 三元组, 四元组, 端口总数, 对应, CMR pair, resource, set, CSI, RS, reference signal, number, port, IMR, NZP, capability, band, combine |

| **C.** | **DOCUMENTS CONSIDERED TO BE RELEVANT** | |
|---|---|---|
| Category* | Citation of document, with indication, where appropriate, of the relevant passages | Relevant to claim No. |
| PX | HUAWEI et al. ""Rel-17 UE features for further NR MIMO enhancements"" *3GPP tsg_ran\wg1_rl1 R1-2109143*, 02 October 2021 (2021-10-02), section 5 | 1-32 |
| Y | HUAWEI et al. ""Discussion on Reply LS on CSI-RS capabilities (FG 2-33/36/40/41/43)"" *3GPP tsg_ran\wg1_rl1 R1-2002673*, 11 April 2020 (2020-04-11), sections 2-3 | 1-32 |
| Y | ZTE. ""CSI enhancements for Multi-TRP and FR1 FDD reciprocity"" *3GPP tsg_ran\wg1_rl1 R1-2104589*, 12 May 2021 (2021-05-12), section 2.2 | 1-32 |
| A | CN 111510269 A (HUAWEI TECHNOLOGIES CO., LTD.) 07 August 2020 (2020-08-07) entire document | 1-32 |
| A | CN 112398622 A (DATANG MOBILE COMMUNICATIONS EQUIPMENT CO., LTD.) 23 February 2021 (2021-02-23) entire document | 1-32 |
| A | WO 2021102803 A1 (APPLE INC. et al.) 03 June 2021 (2021-06-03) entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2022** | **28 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107819**

| Patent document cited in search report | | | Publication date (day/month/year) | Patent family member(s) | | | Publication date (day/month/year) |
|---|---|---|---|---|---|---|---|
| CN | 111510269 | A | 07 August 2020 | CN | 113630230 | A | 09 November 2021 |
| | | | | US | 2021352596 | A1 | 11 November 2021 |
| | | | | EP | 3905541 | A1 | 03 November 2021 |
| | | | | CN | 113660073 | A | 16 November 2021 |
| | | | | CN | 111510269 | B | 20 August 2021 |
| | | | | EP | 3905541 | A4 | 02 March 2022 |
| | | | | IN | 202137033032 | A | 20 August 2021 |
| | | | | WO | 2020143805 | A1 | 16 July 2020 |
| CN | 112398622 | A | 23 February 2021 | WO | 2021031949 | A1 | 25 February 2021 |
| | | | | KR | 20220045027 | A | 12 April 2022 |
| | | | | CN | 112398622 | B | 20 May 2022 |
| | | | | EP | 4017142 | A1 | 22 June 2022 |
| WO | 2021102803 | A1 | 03 June 2021 | EP | 4046444 | A1 | 24 August 2022 |

Form PCT/ISA/210 (patent family annex) (January 2015)

**EP 4 369 774 A1**

REFERENCES CITED IN THE DESCRIPTION

**Patent documents cited in the description**

- CN 202110848557